# EUROPEAN PATENT APPLICATION

(11) **EP 2 172 665 A1**
(43) Date of publication of application: **07.04.2010**
(21) Application number: 08791247.3
(22) Date of filing: 17.07.2008
(51) Int. Cl.: F16C 33/78, F16C 19/38

(54) **BEARING STRUCTURE AND WIND POWER GENERATOR**

(71) Applicant: Mitsubishi Heavy Industries, Ltd., Tokyo 108-8215 (JP)
(72) Inventor: NUMAJIRI, Tomohiro, Nagasaki-shi Nagasaki 850-8610 (JP)
(74) Representative: HOFFMANN EITLE
(86) International application number: PCT/JP2008/062889
(87) International publication number: WO 2010/007677

(57) **Abstract**

A bearing structure that reduces the relative sliding speed of a sealing ring (20) and a contact surface and suppresses relative deformation due to a temperature difference of inner and outer rings (11, 12) is provided. A rolling member (14) is disposed inside a space (16) formed between an outer ring (11) and an inner ring (12), the outer ring (11) or the inner ring (12) rotating relatively via the rolling element (14), wherein a sliding section of the surface of the rolling member (14) and the inner surface of the space (16) is lubricated witch a lubricant supplied into the space (16), and a sealing ring (20) attached to a supporter (13) supporting the rolling element (14) seals an opening of the space (16) at an end section in the axial direction.

## Description

### Technical Field

The present invention relates to a bearing structure and a wind turbine generator.

### Background Art

A wind turbine generator is an apparatus for generating electric power by rotating a rotor head equipped with wind turbine blades receiving wind power and driving a generator using this rotary power. In such a wind turbine generator, a double-row tapered roller bearing or the like that is capable of supporting the momentum with one bearing is employed as a main bearing for supporting the rotation of the rotor head. A lubricant is supplied to sliding sections to smoothly operate the sliding sections, such as the outer ring, the inner ring, and rollers or the like supported between the outer ring and the inner ring, and to prevent heat generation. To prevent malfunction of the sliding sections due to leakage of the lubricant from the bearing and damage etc. to the bearing due to heat generation, a sealing member is provided.
The sealing member is secured to one of the outer ring and the inner ring and contacts the other ring that is not secured to seal the lubricant. This contact section is the sliding section of the sealing member.
In a bearing structure, such as a double-row tapered roller bearing, the diameter of the bearing increases, and therefore the circumferential speed of the sliding section increases, resulting in a tendency to increase the amount of heat generated by friction.

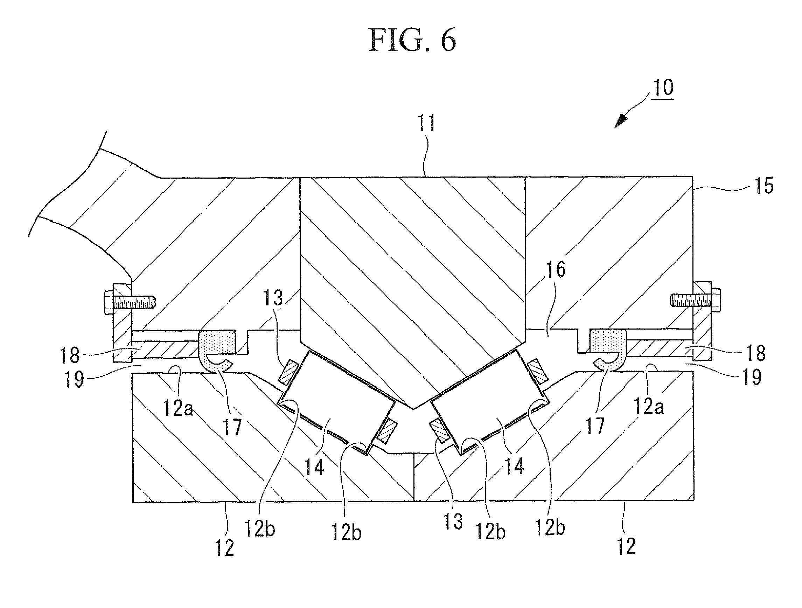

A bearing 10 shown in Fig. 6 has rolling members 14 supported by supporters 13 between an outer ring 11 and an inner ring 12. As the rolling members 14, bearings, such as spheres and rollers, are used.
In the illustrated example configuration, rolling members 14 that are rollers are used. These rolling members 14 are disposed such that a pair is arranged in a substantially V shape in the axial direction. Many are arranged around the entire circumference in the circumferential direction in such a substantially V shape arrangement.
Reference numeral 15 in the drawing represents a casing accommodating seals 17 of the bearing 10.

In a conventional bearing structure constructed in this way, heat is generated by friction at the sliding surfaces where the rolling members 14 contact the outer ring 11 and the inner ring 12. For example, heat is generated at a flange section 12b provided on the inner ring 12. Therefore, a space (lubricant supply area) 16 where the rolling members 14 are disposed is cooled upon receiving the lubricant supply.
Then, the structure sealing the lubricant inside the space 16 where the rolling members 14 are disposed is provided between the outer ring 11 and the inner ring 12 of the bearing 10 (gap 19) or between the casing 15 of the bearing 10 and a shaft (not shown).
In the illustrated example configuration, the outer ring 11 is secured, and the inner ring 12 rotates. A lip seal 17 attached to the secured outer ring 11 as a sealing member contacts a sliding surface 12a on the inner ring 12 and seals the end section (gap 19) of the space 16 formed at the end section in the shaft direction. Reference numeral 18 in the drawing represents a retainer plate of the sealing member, secured to the inner ring 12.

As related art associated with the above-described bearing structure, for example, that described in Patent Document 1 is known. Patent Document 1 proposes a sealed device that allows only a lip seal to be replaced by setting an engagement surface of a retainer and the lip seal of a sheet-metal retainer seal or the like having a sheet-metal retainer and a lip seal as the outer circumferential surface of the retainer and the inner circumferential surface of the lip seal.
In addition to a contact seal member, such as the lip seal, a non-contact type member, such as labyrinth seal, is known.
Patent Document 1:
   Japanese Unexamined Patent Application, Publication No. 2003-343739

### Disclosure of Invention

With the above-described bearing structure according to the related art, for example, auxiliary parts, such as a ring member with a groove or an attachment portion or a retainer plate 18 of a sealing member, are required for sealing a gap 19 by attaching a sealing member such as a lip seal 17. Therefore, a problem has been noted in that the structure becomes complicated due to an increase in the number of components, and manufacturing requires time and effort.
Since the contact surface with the sealing member is limited to one of the rotating side and the secured side, the relative speed difference determined by the speed of the rotating side becomes large, thus increasing the amount of heat generated by friction. Therefore, in a bearing 10, since the temperature difference between an outer ring 11 and an inner ring 12 becomes large, thus increasing relative deformation due to the temperature difference, control of pre-compression and the gaps between the rotating elements 14, the outer ring 11, and the inner ring 12 was difficult.

Furthermore, in a bearing structure such as a double-row tapered roller bearing, since there is a problem in that the temperature of the lubricant rises due to the effect of heat generated by friction as described above, not only is the type of usable lubricant limited, but there was also a tendency for the scale of the additional equipment required for operating the bearing structure to become large, such as a cooling device for cooling the higher-temperature lubricant being required.
The present invention has been conceived in light of the above-described circumstances, and an object thereof is to provide a bearing structure capable of reducing the relative sliding speed of the sealing member and the contact surface and suppressing relative deformation due to a temperature difference in the inner and outer rings. Moreover, another object of the present invention is to provide a wind turbine generator employing such a bearing structure as a main bearing.

To solve the above-described problem, the present invention employs the hollowing solutions.
The bearing structure according to the present invention is a bearing structure in which a rolling member is disposed inside a space formed between an outer ring and an inner ring, the outer ring or the inner ring rotating relatively via the rolling element, wherein a sliding section of the surface of the rolling member and the inner surface of the space is lubricated with a lubricant supplied into the space, and a sealing member attached to a supporter supporting the rolling element seals an opening of the space at an end section in an axial direction.

In such a bearing structure, since the supporter supporting the rotating element rotates at a rotational speed that is substantially half of that of the rotating side of the bearing, the relative sliding speed of the sealing member attached to the supporter and the sliding surface of the outer ring and the inner ring is reduced to substantially half of that when compared with the relative rotational speed of the fixed side and the rotating side of the bearing.
In the above-described present invention, it is preferable that the sliding section of the surface of the rolling member and the inner surface of the space be lubricated and cooled with the lubricant supplied into the space.

In such a case, in the structure for attaching the sealing member to the supporter, in addition to engagement, bonding, and securing with bolts, etc., the sealing member may be engaged to the supporter so that the sealing member is relatively slidable.
The counterpart member (contact surface) to which the sealing member sealing the space at the end section in the axial direction contacts may be a casing member that shares the outer ring and a shaft member sharing the inner ring in addition to the outer ring and the inner ring.

A wind turbine generator according to the present invention has a shaft section configured to rotate together with a rotor head equipped with wind turbine blades, the shaft section being a bearing structure in which a rolling member is disposed inside a space formed between an outer ring and an inner ring, the outer ring or the inner ring rotating relatively via the rolling element, wherein a sliding section of the surface of the rolling member and the inner surface of the space is lubricated with a lubricant supplied into the space, and a sealing member attached to a supporter supporting the rolling element seals an opening of the space at an end section in an axial direction.
In such a case, it is preferable that, in the bearing structure, the sliding section of the surface of the rolling member and the inner surface of the space be lubricated and cooled with the lubricant supplied into the space.

In such a wind turbine generator, the relative sliding speed of the main bearing supporting the shaft section that rotates together with the rotor head and the contact surface where the sealing member contacts to seal the end section of the space in the axial direction can be reduced to approximately one-half.

With the above-described bearing structure according to the present invention, the relative sliding speed, during rotation, of the sealing member sealing the end section in the axial direction of the space where the lubricant is supplied and the contact surface of the counterpart member sealed by the contacting sealing member can be reduced. Consequently, the amount of heat generated by frictional heat, etc. generated at the sliding surface is reduced, and relative deformation due to the temperature difference between the outer ring and the inner ring can be suppressed. Thus, it becomes easy to control the gaps between members in the bearing structure and to control pre-compression.

As a result, a cooling device for cooling the lubricant, etc. in order to prevent the effect of relative deformation, etc. due to a temperature difference between the inner and outer rings is not required. Accordingly, there are significant advantages in that simplification, size reduction, and cost reduction of the bearing structure are enabled, and reliability and durability are improved.
Since simplification, size reduction, and cost reduction of the bearing structure are possible in the wind turbine generator employing the above-described bearing structure, simplification, size reduction, and cost reduction of an entire wind turbine generator are also possible. Moreover, a significant advantage of improved reliability and durability is achieved.

### Brief Description of Drawings

[Fig. 1] Fig. 1 is a sectional view of the relevant parts of an example configuration of a double-row tapered roller bearing illustrated as an embodiment of a bearing structure according to the present invention.
[Fig. 2] Fig. 2 is a side view illustrating, in outline, a wind turbine generator employing the bearing structure according to the present invention in a main bearing.
[Fig. 3] Fig. 3 is a sectional view of an example configuration of the bearing structure of the wind turbine generator illustrated in Fig. 2, in which an outer ring side of the main bearing rotates together with a rotor head.
[Fig. 4] Fig. 4 is a sectional view of an example configuration of the bearing structure of the wind turbine generator illustrated in Fig. 2, in which an inner ring side of the main bearing rotates together with the rotor head.
[Fig. 5] Fig. 5 is a sectional view of the relevant parts of an example configuration of a three-roller bearing illustrated as an embodiment of a bearing structure according to the present invention.
[Fig. 6] Fig. 6 is a sectional view of the relevant parts of a double-row tapered roller bearing illustrated as an example of a bearing structure according to the related art. Explanation of Reference Signs:

- 1:: wind turbine generator
- 3:: nacelle
- 4:: rotor head
- 5:: blade (wind turbine rotor blade)
- 10, 10A:: bearing
- 11, 51:: outer ring
- 12, 52:: inner ring
- 13, 53:: supporter
- 14, 54:: rolling member

- 16, 55:: space (lubricant supply area)
- 17, 21, 61:: lip seal
- 20, 60:: sealing ring
- 50:: three-roller bearing

### Best Mode for Carrying Out the Invention

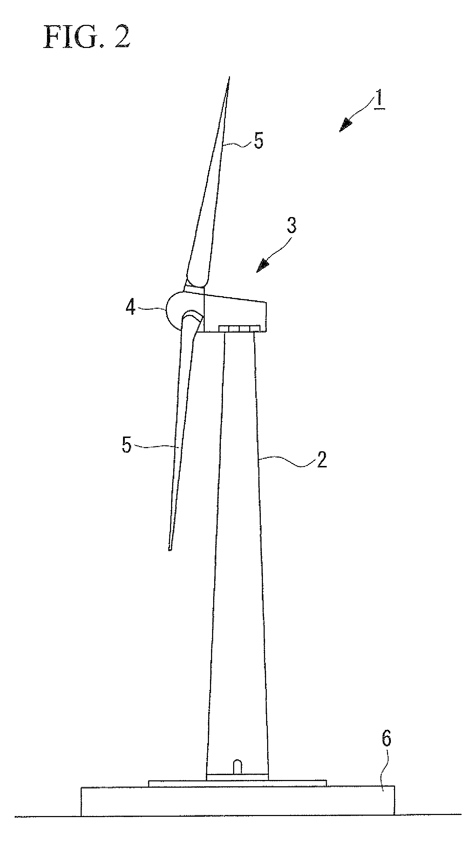

An embodiment of a bearing structure and a wind turbine generator according to the present invention will be described below with reference to the drawings.
A wind turbine generator 1 shown in Fig. 2 has a tower 2 vertically provided on a base 6, a nacelle 3 disposed at the upper end of the tower 2, and a rotor head 4 provided on the nacelle 3 in such a manner that it is rotatable around a substantially horizontal axis.

A plurality of blades (wind turbine rotor blades) 5 are attached to the rotor head 4, in a radial pattern around its rotational axis. In this way, the force of the wind received by the blades (wind turbine rotor blades) 5 from the direction of the rotational axis of the rotor head 4 is converted to motive power that rotates the rotor head 4 around the rotational axis. This motive power can be used to drive a power generator disposed inside the nacelle 3.

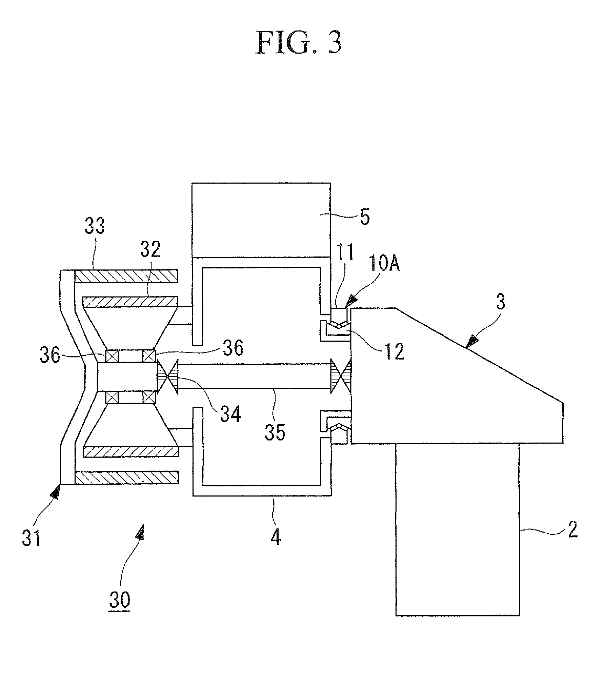

Fig. 3 illustrates an example configuration of a drive train 30 disposed outside the nacelle 3 of the wind turbine generator 1, on the rotor head side. In this case, a gear box for increasing the rotational speed of the rotor head 4 is not provided. In this drive train 30, the rotation of the rotor head 4, which is provided with the blades (wind turbine rotor blades) 5, is supported by a main bearing 10A. In this case, the rotor head 4 rotates together with an outer ruing 11 of the main bearing 10A.

In the illustrated drive train 30, a rotor 32 of a power generator 31 rotates integrally with the rotor head 4. In the power generator 31, since a stator 33 is disposed on the outer circumference of the rotor 32, power generation can be carried out according to the law of electromagnetic induction.
The stator 33 is attached to the end of a power-generator shaft 35 attached to the nacelle 3 via a two-stage flexible coupling 34. The rotor 32 rotates via a bearing 36 provided on the outer circumferential surface of the power-generator shaft 35.

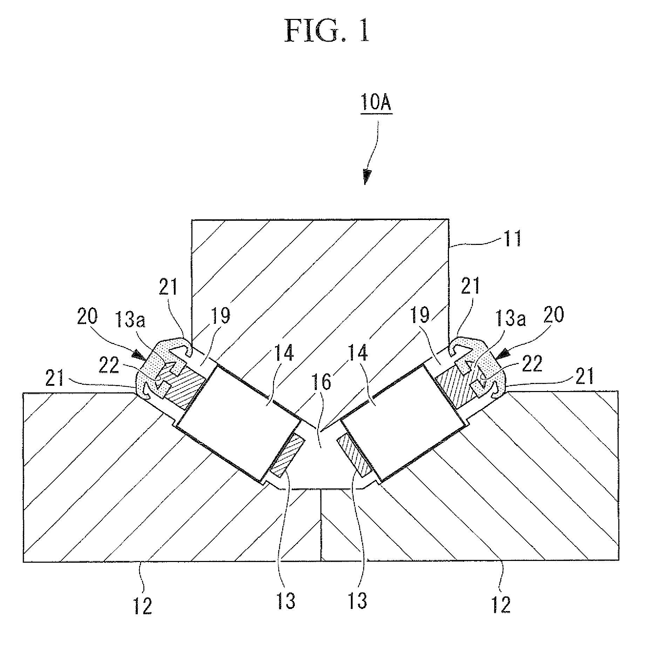

The main bearing 10A, which is illustrated in Fig. 1, is provided with rolling members 14 supported between the outer ring 11 and an inner ring 12 by supporters 13. In the illustrated example configuration, roller bearings are used as the rolling members 14 and are accommodated in a space 16 formed between the outer ring 11 and the inner ring 12. The rolling members 14 are disposed such that a pair is arranged in a substantially V shape in the axial direction of the main bearing 10A. Many are arranged around the entire circumference of the main bearing 10A in the circumferential direction in such a substantially V shaped arrangement.

Gaps 19 having diameters substantially equal to the diameters of the rolling members 14 are formed at the ends of the space 16 in the axial direction between the outer ring 11 and the inner ring 12. The gaps 19 are present at both ends in the axial direction around the entire circumference of the main bearing 10A.
The temperature rises due to heat generated by friction when the rolling members 14 slide against the inner surface at the above-described space 16. To prevent such a temperature rise, the space 16 where the rolling members 14 are disposed is cooled upon receiving supplied lubricant. In other words, the space 16 where the rolling members 14 are disposed is connected to a lubricant circulation system provided with a lubricant source, which is not shown. The lubricant circulation system is a closed-circuit lubricant circulation channel configured to supply lubricant from the lubricant source to the inside of the space 16, as well as to collect, in the lubricant source, the lubricant used for cooling after flowing through required locations inside the space 16.

The gaps 19 formed at both ends in the axial direction of the space 16, which receives a lubricant supply, are sealed with sealing rings 20 to ensure the circulation of the lubricant. Each of the sealing rings 20 is a sealing member constructed of rubber or the like and has a lip seal 21 at both ends. The sealing ring 20 may be an integrated ring or may be attached after combining divided pieces with an adhesive or the like as required.
The above-described sealing ring 20 is attached to the supporter 13, which is a member supporting the rolling member 14. The illustrated example configuration employs an engagement structure that enables the sealing ring 20 to be engaged in one action by providing a latching projection 13a on one end of the supporter 13 and engaging it with a resilient engagement depression 22 provided on the sealing ring 20.

In the above-described sealing ring 20, the lip seal 21 in a predetermined attachment state is in close contact with the outer ring 11 and the inner ring 12 to seal the gaps 19. As a result, the space 16, which receives the lubricant supply, becomes a sealed space, thus preventing the lubricant from leaking from the lubricant circulation system including the space 16.
The sealing ring 20 having the above-described structure is attached to the supporter 13. Since the supporter 13 rotates at a rotational speed that is substantially half of that of the rotating side of the main bearing 10A, the relative sliding speed of the lip seal 21 of the sealing ring 20 attached to the supporter 13 and the sliding surface of the outer ring 11 and the inner ring 12 is reduced to substantially half of that when compared with the relative rotational speed of the fixed side and the rotating side of the main bearing 10A.

In this way, when the relative sliding speed of the lip seal 21 is reduced, not only is the amount of wearing due to friction reduced, but also the amount of heat generated due to friction is reduced. In other words, for the lip seal 21 that rotates integrally with the supporter 13, the relative sliding speed of the sliding surface of the outer ring 11, which is the rotating side, and the relative sliding speed of the sliding surface of the inner ring 12, which is the fixed side, are substantially the same, and therefore, the amounts of heat generated at the outer ring 11 and the inner ring 12 are also substantially the same. Consequently, the relative temperature difference between the members due to the temperature difference of the inner and outer rings can be suppressed.

By suppressing the relative temperature difference between the members in this way, it becomes easy to control the gaps between the members constituting the main bearing 10A and to control pre-compression. As a result, a cooling device for cooling the lubricant, etc. in order to prevent the influence of a temperature difference between the inner and outer rings is not required. In other words, since the amount of heat absorbed through the cooling by the lubricant is reduced due to the reduction of the amount of heat generated at the sliding sections, a cooling device for cooling the lubricant through heat transfer with outside air, etc. is not required.

In the above-described main bearing 10A, the attachment of the sealing rings 20 is not limited to the engagement structure illustrated in Fig. 1.
As another attachment structure usable for the sealing rings 20, an adhesive structure in which the supporters 13 are secured with an adhesive or a securing structure for mechanically securing the supporters 13 using bolts, etc. may be employed.
The sealing rings 20 attached to the supporters 13 are not limited to the above-described structure secured to the supporters 13, and the sealing rings 20 may be attached to the supporters 13 in such a manner that they are relatively slidable.

It is preferable that the sliding surface contacted and sealed by the lip seal 21 of the sealing ring 20 have a structure in which the lip seal 21 directly contacts both surfaces of the outer ring 11 and the inner ring 12. However, so long as the gaps 19 in the space 16 can be sealed, for example, a structure in which one of the lip seals 21 contacts the shaft section sharing the inner ring 12 or a structure in which one of the lip seals 21 contacts a member, such as a casing, sharing the outer ring 11 may be employed.

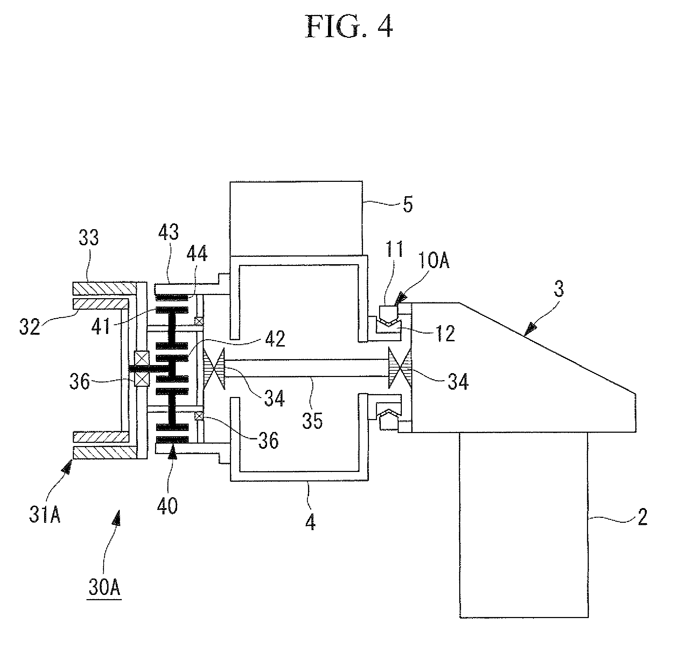

As an example configuration in which the inner ring 12 of the main bearing 10A rotates, Fig. 4 illustrates an example configuration of a drive train 30A disposed outside the nacelle 3 of the wind turbine generator 1 on the rotor heat side. The illustrated drive train 30A is provided with a gear box 40 that increases the rotational speed of the rotor head 4 and drives a power generator 31A at an increased rotational speed in order to generate power. In the illustrated example configuration, the inner ring 12 of the main bearing 10A rotates together with the rotor head 4. The sections that are the same as those in the above-described Fig. 3 are represented by the same reference numerals, and detailed descriptions thereof are omitted.

The drive train 30A employs a star-type one-stage gear box 40. The drive train 30A supports a planetary gear 41 at the tip of a generator shaft 35 equipped with the two-stage flexible coupling 34. The stator 33 is attached at the tip side of the drive train 30A. On the other hand, the rotor 32 is connected to the same shaft as a sun gear 42 supported in a rotatable manner on the rear end surface of the stator 33.

Then, since a gear section 44 of a casing 43, the planetary gear 41, and the sun gear 42 are engaged by integrally rotating the casing 43 with the rotor head 4, the rotor 32 also rotates at a higher rotational speed than that of the rotor head 4 according to the gear ratio. In other words, in such a case, in the power generator 31A, since the rotor 32 rotating together with the sun gear 42 rotates around substantially the same axis on the inner side of the stator 33, power generation is carried out according to the law of electromagnetic induction.

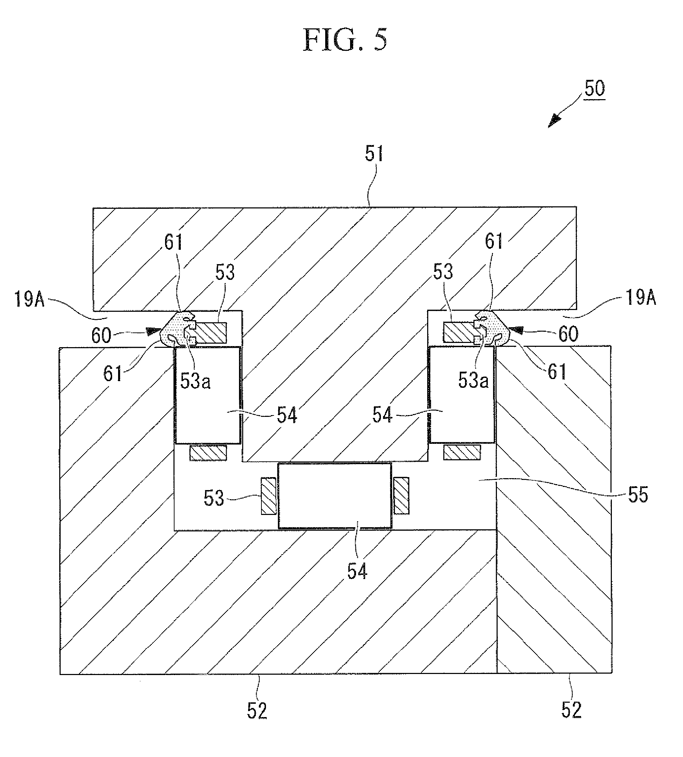

Fig. 5 illustrates an example configuration in which the present invention is applied to a three--roller bearing 50.
In the illustrated three-roller bearing 50, rolling members 54 supported by supporters 53 are disposed between an outer ring 51 and an inner ring 52. In such a case, three rolling members 54 are used in cross section: one roller disposed in the axial direction, and two rollers disposed in the circumferential direction.
The three rolling members 54 are accommodated inside a space 55 formed between the outer ring 51 and the inner ring 52, and seal rings 60 are attached to the supporters 53 to seal gaps 19A formed at both ends of the space 55 in the axial direction.

The seal rings 60 have lip seals 61 that closely contact and seal the sliding surface of the outer ring 51 and the inner ring 52.
As the structure for attaching the seal rings 60 to the supporters 53, an engagement structure for engaging the seal rings 60 by providing latching projections 53a on one end of the supporters 53, similar to that shown in the above-described Fig. 1, is employed. However, the structure is not limited thereto.

Even with a three-roller bearing 50 having such a structure, the lip seal 61 closely contacts the outer ring 51 and the inner ring 52 in a predetermined attachment state and seals the gaps 19A. Accordingly, the space 55, which receives a lubricant supply, becomes a sealed space, thus preventing the lubricant leaking from a lubricant circulation system including the space 55.
The sealing ring 60 having the above-described structure is attached to the supporter 53. Since the supporter 53 rotates at a rotational speed that is substantially half of that of the rotating side of the three-roller bearing 50, the relative sliding speed of the lip seal 61 of the sealing ring 60 attached to the supporter 53 and the sliding surface of the outer ring 51 and the inner ring 52 is reduced to substantially half when compared with the relative rotational speed of the fixed side and the rotating side of the three-roller bearing 50.

In this way, with the above-described bearing structure according to the present invention, the relative sliding speed, during rotation, of the contact surfaces of the sealing members 20 and 60 sealing the end sections in the axial direction of the spaces 16 and 55 to which a lubricant is supplied and the counterparts that contact and are sealed by the sealing members 20 and 60 can be reduced. Accordingly, since the amount of heat, e.g., frictional heat, generated on the sliding surfaces is reduced, relative deformation due to the temperature difference between the outer rings 11 and 51 and the inner rings 12 and 52 can be suppressed. Thus, it becomes easy to control the gaps between members in the bearing structure and to control pre-compression.

Therefore, a cooling device for cooling the lubricant, etc. in order to prevent the effect of relative deformation, etc. due to a temperature difference between the inner and outer rings is not required. Consequently, simplification, size reduction, and cost reduction of the bearing structure are possible, and, furthermore, the reliability and durability of the bearing structure can be improved.
Since simplification, size reduction, and cost reduction of the bearing structure are possible in the wind turbine generator employing the above-described bearing structure, simplification, size reduction, and cost reduction of an entire wind turbine generator are possible.

The type of bearing to which the present invention described above is applied is not particularly limited. However, when the present invention is applied to a double-row tapered roller bearing used for the wind turbine generator 1, the effect of parts reduction and so on is particularly large.
The present invention is not limited to the above-described embodiments, and modifications are possible within the scope of the invention, such as changing combinations associated with the configuration of the gear box and the configuration of the generator, or changing combinations associated with the bearing and coupling.

## Claims

1. A bearing structure in which a rolling member is disposed inside a space formed between an outer ring and an inner ring, the outer ring or the inner ring rotating relatively via the rolling element, wherein
a sliding section between the surface of the rolling member and the inner surface of the space is lubricated with a lubricant supplied into the space, and
a sealing member attached to a supporter supporting the rolling element seals an opening of the space at an end section in an axial direction.

2. The bearing structure according to Claim 1, wherein the sliding section between the surface of the rolling member and the inner surface of the space is lubricated and cooled with the lubricant supplied into the space.

3. A wind turbine generator supported by a main bearing comprising:
a shaft section configured to rotate together with a rotor head equipped with wind turbine blades, the shaft section including the bearing structure according to Claim 1 or 2.
